# EUROPÄISCHE PATENTSCHRIFT

(11) **EP 3 479 092 B1**
(45) Veröffentlichungstag und Bekanntmachung des Hinweises auf die Patenterteilung: **15.11.2023**
(21) Anmeldenummer: 17735033.7
(22) Anmeldetag: 23.06.2017
(51) Int. Cl.: G01M 13/005, G01M 3/32

(54) **PRÜFANORDNUNG FÜR EIN EXPLOSIONSGESCHÜTZTES GEHÄUSES, EXPLOSIONSGESCHÜTZTES GEHÄUSE MIT EINER PRÜFANORDNUNG SOWIE VERFAHREN ZUR HERSTELLUNG UND PRÜFUNG EINES EXPLOSIONSGESCHÜTZTEN GEHÄUSES**
TEST ARRANGEMENT FOR AN EXPLOSION-PROOF HOUSING, EXPLOSION-PROOF HOUSING HAVING A TEST ARRANGEMENT AND METHOD FOR PRODUCING AND TESTING AN EXPLOSION-PROOF HOUSING
SYSTÈME D'ESSAI POUR BOÎTIER ANTIDÉFLAGRANT, BOÎTIER ANTIDÉFLAGRANT MUNI D'UN SYSTÈME D'ESSAI AINSI QUE PROCÉDÉ DE FABRICATION ET D'ESSAI D'UN BOÎTIER ANTIDÉFLAGRANT

(30) Priorität: 01.07.2016 DE 102016112076
(43) Veröffentlichungstag der Anmeldung: 08.05.2019
(73) Patentinhaber: R. Stahl Schaltgeräte GmbH, 74638 Waldenburg (DE)
(72) Erfinder: SCHULZ, Berthold, 74214 Schöntal (DE)
(74) Vertreter: Rüger Abel Patentanwälte PartGmbB
(86) Internationale Anmeldenummer: PCT/EP2017/065495
(87) Internationale Veröffentlichungsnummer: WO 2018/001881

(56) Entgegenhaltungen:
- EP-A1- 2 924 412
- EP-A2- 2 209 168
- DE-A1-102010 018 784
- US-A1- 2012 234 097

## Beschreibung

Die Erfindung betrifft eine Prüfanordnung für ein explosionsgeschütztes Gehäuse sowie ein explosionsgeschütztes Gehäuse, das eine Prüfanordnung aufweist. Außerdem betrifft die Erfindung ein Verfahren zur Herstellung und Prüfung eines explosionsgeschützten Gehäuses.

Bei der Herstellung von explosionsgeschützten Gehäusen, insbesondere Gehäusen in der Zündschutzart Ex-d ("druckfeste Kapselung") kann es erforderlich sein, die Gehäuse durch eine Druckprüfung mit einem Gasdruck, insbesondere Luftdruck, zu prüfen, um sicherzustellen, dass das Gehäuse die standardisierten bzw. normierten Anforderungen erfüllt. So ist in DIN EN 60079-1 vorgeschrieben, dass aus Einzelteilen geschweißte druckfeste Gehäuse stückgeprüft werden müssen und dabei einem bestimmten vorgegebenen Luftinnendruck standhalten müssen. Um die Druckprüfung ausführen zu können, muss über einen Zugang Luft in den Gehäuseinnenraum geführt werden. Dieser Zugang muss nach der Druckprüfung verschlossen werden.

In der Praxis werden kleine Gehäuse aus Kunststoff, bei denen keine bewegbaren Betätigungselemente vorhanden sind, nach der Druckprüfung durch ein Gießharz verschlossen. Beispielsweise kann durch die zur Druckprüfung verwendete Gehäuseöffnung das Gießharz in den Innenraum des Gehäuses eingefüllt und das Gehäuse vollständig mit Gießharz aufgefüllt werden. Dieses Verfahren eignet sich nur für kleinvolumige Gehäuse, da ansonsten eine große Menge Gießharz notwendig ist. Das Verschließen oder Auffüllen des Gehäuses mit einem Gießharz ist in der Praxis zudem aufwendig.

Es sind auch andere zünddurchschlagsichere Leitungsdurchführungen durch Gehäusewände von druckfesten Kapselungen bekannt. DE 10 2010 017 153 A1 beschreibt beispielsweise eine solche Leitungsdurchführung. Um eine Leitung zünddurchschlagsicher durch die Gehäusewand zu führen, kann beispielsweise in der Gehäusewand ein Innengewinde vorgesehen sein, in das ein Durchführungskörper eingeschraubt wird, wobei durch den Gewindeeingriff ein zünddurchschlagsicheres Gewindespalt gebildet ist. Hierfür ist es allerdings notwendig, in die Gehäusewand ein Innengewinde und einen Körper mit einem Außengewinde bereitzustellen, wobei die Gewinde genau aneinander angepasst sein müssen, um die Zünddurchschlagsicherheit des Gewindespalts zu gewährleisten. Bei sehr kleinen Wandstärken ist diese Vorgehensweise nicht praktikabel.

EP 2 924 412 A1 beschreibt ein Gehäuseteil, das über eine Prüfteilanordnung einer Druckprüfung unterzogen wird. Eine Verschlussplatte der Prüfanordnung schließt das Gehäuseteil an einer Öffnung ab. In der Verschlussplatte ist wenigstens ein Kanal vorhanden, um Druckmittel in das Innere des Gehäuses einzuleiten.

US 2012/0234097 A1 beschreibt einen Drucksensor, der über einen Kanal mit einem Hydraulikdruck beaufschlagbar ist. In dem Kanal zum Drucksensor sitzt eine Flammsperre. Die Flammsperre kann in den Kanal durch Presssitz oder Stauchen eingedrückt werden.

Die explosionsgeschützte Vorrichtung nach DE 10 2010 018 784 A1 weist ein Gehäuseteil auf, das auf einer Leiterplatte befestigt ist und das elektrische bzw. elektronische Bauteile umschließt, um ein Eingießen der Bauteile zu vermeiden.

Aus EP 2 209 168 A2 ist eine Aderleitungseinführung bekannt. Die Aderleitungseinführung hat eine Montagehülse mit zwei zylindrischen Gehäuseeinsätzen. In diesen Gehäuseeinsätzen sind Aufnahmen gebildet. In jede Aufnahme kann ein Kontakthalter eingesteckt werden. Jeder Kontakthalter hat Rastzungen, um in der Aufnahme des betreffenden Gehäuseeinsatzes gehalten zu werden. In eine Bohrung jedes Kontakthalters kann wahlweise ein Kontaktstecker oder eine Kontaktbuchse eingesetzt werden. Über Befestigungskrallen kann die Kontaktbuchse oder der Kontaktstecker in der Bohrung des Kontakthalters verrastet werden.

Ausgehend von dem bekannten Stand der Technik kann es als Aufgabe der Erfindung angesehen werden, eine Prüfanordnung bzw. ein explosionsgeschütztes Gehäuse zu schaffen, das eine Druckprüfung des explosionsgeschützten Gehäuses ermöglicht und die Herstellung bzw. Fertigstellung des explosionsgeschützten Gehäuses vereinfacht.

Diese Aufgabe wird durch eine Prüfanordnung mit den Merkmalen des Patentanspruches 1, durch ein explosionsgeschütztes Gehäuse mit den Merkmalen des Patentanspruchs 11 sowie ein Verfahren mit den Merkmalen des Patentanspruchs 13 gelöst.

Die Erfindung schlägt eine Prüfanordnung für ein explosionsgeschütztes Gehäuse vor. Die Prüfanordnung weist ein Prüfteil auf, das Bestandteil des herzustellenden Gehäuses ist. Insbesondere wird das Prüfteil mit wenigstens einem weiteren Gehäuseteil fest verbunden, beispielsweise verschweißt oder auf andere Weise stoffschlüssig verbunden, um einen Gehäuseinnenraum des Gehäuses zu umschließen. Das Prüfteil wird von einem Prüfkanal vollständig durchsetzt. Der Prüfkanal mündet auf einer Innenseite des Prüfteils, die dem Gehäuseinnenraum zugeordnet ist, an einer inneren Mündung aus. Auf der entgegengesetzten Außenseite mündet der Prüfkanal an einer äußeren Mündung aus. Der Prüfkanal erstreckt sich vorzugsweise entlang einer Längsachse und mithin geradlinig. Bei einem Ausführungsbeispiel ist der Prüfkanal zumindest abschnittsweise zylindrisch ausgeführt.

Zu der Prüfanordnung gehört neben dem Prüfteil auch ein Verschlussteil. Das Verschlussteil ist in einer Einsteckrichtung in den Prüfkanal einsteckbar. In einer Schließstellung des Verschlussteils verschließt es den Prüfkanal zünddurschlagsicher. Das Verschlussteil ist in der Schließstellung insbesondere nicht stoffschlüssig mit dem Prüfteil verbunden. Es muss keine gasdichte Abdichtung des Prüfkanals erfolgen, vielmehr kann zwischen der Kanalwand des Prüfkanals und dem Verschlussteil - zumindest entlang eines Axialabschnitts - ein zünddurchschlagsicherer Spalt gebildet sein. Das Verschlussteil weist eine Anschlagfläche auf, die schräg oder rechtwinklig zu der Einsteckrichtung ausgerichtet ist. An dem Prüfteil ist benachbart zum Prüfkanal eine Gegenanschlagfläche vorhanden. Die Gegenanschlagfläche ist schräg oder rechtwinklig zur Einsteckrichtung ausgerichtet und weist - entgegen der Einsteckrichtung - zur äußeren Mündung hin. Die Einsteckrichtung ist von der äußeren Mündung des Prüfkanals in Richtung zur inneren Mündung des Prüfkanals hin ausgerichtet.

Wird das Verschlussteil durch Einstecken in Einsteckrichtung in seine Schließstellung bewegt und gelangt die Anschlagfläche an der Gegenanschlagfläche zur Anlage, ist eine weitere Verschiebung oder Bewegung des Verschlussteils in Einsteckrichtung blockiert.

Außerdem ist an dem Prüfteil eine Sicherungseinrichtung vorhanden. Die Sicherungseinrichtung nimmt eine Sicherungsstellung insbesondere selbsttätig ein, sobald sich das Verschlussteil in seiner Schließstellung befindet. Durch die Sicherungsstellung der Sicherungseinrichtung wird das Verschlussteil gesichert und eine Bewegung entgegen der Einsteckrichtung verhindert. Vorzugsweise beaufschlagt die Sicherungseinrichtung das Verschlussteil mit einer Sicherungskraft in Einsteckrichtung, so dass das Verschlussteil mit seiner Anschlagfläche gegen die Gegenanschlagfläche gedrückt wird und entlang der Längsachse des Prüfkanals im Wesentlichen spielfrei im Prüfkanal fixiert ist. Das spielfreie Fixieren ist allerdings nicht notwendig und das Verschlussteil kann auch mit einem geringfügen Bewegungsspiel in bzw. entgegen der Einsteckrichtung in der Schließstellung gesichert werden.

Die Sicherungseinrichtung ist vorzugsweise elastisch in die Sicherungsstellung vorgespannt. Eine besondere Betätigung der Sicherungseinrichtung ist vorzugsweise nicht erforderlich. Durch Einstecken des Verschlussteils in Einsteckrichtung in den Prüfkanal und insbesondere bereits bzw. nur dadurch wird der Prüfkanal zünddurchschlagsicher verschlossen. Die Sicherungseinrichtung verhindert, dass im Falle einer Explosion im Gehäuseinnenraum eines explosionsgeschützten Gehäuses ein Druck oder eine Kraft auf das Verschlussteil einwirkt, der bzw. die das Verschlussteil aus dem Prüfkanal entgegen der Einsteckrichtung herausbewegen könnte.

Das Verschlussteil kann abschnittsweise zylindrisch sein. Vorzugsweise hat das Verschlussteil wenigstens zwei kreiszylindrische Abschnitte unterschiedlichen Durchmessers.

Über den Prüfkanal kann eine einfache Prüfung des Mittels der Prüfanordnung hergestellten explosionsgeschützten Gehäuses erfolgen. Der Gehäuseinnenraum muss nicht zugänglich sein. Nach der Durchführung der Druckprüfung des Gehäuses wird der hierfür bereitgestellte Prüfkanal schnell und einfach durch eine Bewegung des Verschlussteils in Einsteckrichtung in die Schließstellung zünddurchschlagsicher geschlossen.

Vorzugsweise ist das Verschlussteil und/oder das Prüfteil jeweils integral ohne Naht- und Fügestelle aus einem einheitlichen Material hergestellt. Bei einem Ausführungsbeispiel ist das Verschlussteil und/oder das Prüfteil aus Kunststoff hergestellt.

Bei einem Ausführungsbeispiel kann das Verschlussteil aus einem für eine Lichtwellenlänge bzw. einen Lichtwellenlängenbereich transparenten Material hergestellt sein. Insbesondere ist das Verschlussteil für eine Lichtwellenlänge oder einen Lichtwellenlängenbereich des sichtbaren Lichts transparent, so dass es Licht in den Gehäuseinnenraum oder aus dem Gehäuseinnenraum durchlassen kann.

Es ist vorteilhaft, wenn die Sicherungseinrichtung wenigstens ein Rastelement aufweist. Das wenigstens eine Rastelement ist rechtwinklig und/oder schräg zu der Einsteckrichtung bewegbar und vorzugsweise elastisch bewegbar am Prüfteil gelagert.

Beispielsweise kann das Rastelement durch einen elastisch schwenkbaren Rastvorsprung gebildet sein.

Das wenigstens eine Rastelement ragt bei einem Ausführungsbeispiel in einen Sicherungskanalabschnitt des Prüfkanals hinein. Der Sicherungskanalabschnitt kann sich beispielsweise an die äußere Mündung des Prüfkanals anschließen.

Es ist außerdem vorteilhaft, wenn an dem Verschlussteil ein Gegenrastelement vorhanden ist, das in der Schließstellung des Verschlussteils mit dem Rastelement zusammenwirkt. Das Gegenrastelement kann beispielsweise durch eine oder an einer Radialstufe an dem Verschlussteil gebildet sein. Die Radialstufe kann vorzugsweise als ringförmige geschlossene Ringstufe ausgeführt sein, beispielsweise an einem Ringbund des Verschlussteils.

Es ist außerdem vorteilhaft, wenn an dem Sicherungskanalabschnitt benachbart zu dem wenigstens einen Rastelement eine Aussparung vorhanden ist. Die Aussparung kann radial zur Einsteckrichtung betrachtet auf Höhe eines freien Endes des Rastelements vorhanden sein, so dass das freie Ende aus dem Prüfkanal bzw. aus dem Sicherungskanalabschnitt heraus in die Aussparung bewegt und beispielsweise geschwenkt werden kann.

Es ist außerdem vorteilhaft, wenn das Verschlussteil in Einsteckrichtung in den Prüfkanal einsteckbar ist, bis es eine Prüfstellung einnimmt. Die Prüfstellung ist von der Schließstellung verschieden. In der Prüfstellung ist das Verschlussteil kraftschlüssig, vorzugsweise durch eine Klemmeinrichtung, in dem Prüfkanal gehalten. Insbesondere befindet sich die Sicherungseinrichtung nicht in der Sicherungsstellung, so dass das Verschlussteil nicht gegen ein Herausziehen entgegen der Einsteckrichtung gesichert ist. In der Prüfstellung ist der Prüfkanal nicht zünddurchschlagsicher geschlossen. Vielmehr ist eine Gasströmung mit einem Volumenstrom durch den Prüfkanal möglich, der größer ist als der Volumenstrom einer Gasströmung, wenn sich das Verschlussteil in der Schließstellung befindet. In der Prüfstellung ist das Verschlussteil sozusagen verliersicher am Prüfteil gehalten, so dass es gemeinsam mit dem Prüfteil bzw. dem daraus hergestellten explosionsgeschützten Gehäuse handhabbar ist.

Der Prüfkanal kann bei einer Ausführungsform einen Klemmkanalabschnitt aufweisen, dem eine Klemmeinrichtung zugeordnet ist. Die Klemmeinrichtung ist dazu eingerichtet, das Verschlussteil in dessen Prüfstellung klemmend zu beaufschlagen. Hierzu kann die Klemmeinrichtung beispielsweise wenigstens ein Klemmelement aufweisen, das in den Klemmkanalabschnitt hineinragt. Zum Beispiel kann die Klemmeinrichtung zwei diametral gegenüberliegende Klemmvorsprünge aufweisen, die sich radial von einer Kanalwand in den Klemmkanalabschnitt hinein erstrecken.

Es ist außerdem vorteilhaft, wenn der Prüfkanal einen Schutzkanalabschnitt aufweist, der dazu eingerichtet ist, gemeinsam mit einem Schutzlängsabschnitt des Verschlussteils einen zünddurchschlagsicheren Spalt zu begrenzen, wenn sich das Verschlussteil in der Schließstellung befindet. Der Schutzlängsabschnitt und der Schutzkanalabschnitt können dabei jeweils einen kreisrunden Querschnitt aufweisen. Der Schutzlängsabschnitt des Verschlussteils und der Schutzkanalabschnitt des Prüfkanals können in der Schließstellung kraftschlüssig aneinander anliegen bzw. eine Presspassung bilden.

Vorzugsweise ist der Prüfkanal innengewindefrei ausgeführt. Außerdem kann das Verschlussteil außengewindefrei ausgeführt sein. Dadurch kann die Verbindung zwischen dem Verschlussteil und dem Prüfteil ohne Drehbewegung durch eine lineare Einsteckbewegung in Einsteckrichtung hergestellt werden.

Bei einer weiteren bevorzugten Ausführungsform kann das Verschlussteil einen Durchlasslängsabschnitt aufweisen, dessen Querschnittsfläche kleiner ist als die Querschnittsfläche des Schutzlängsabschnitts. Befindet sich der Durchlasslängsabschnitt innerhalb des Schutzkanalabschnitts des Prüfkanals und der Schutzlängsabschnitt des Verschlussteils außerhalb des Schutzkanalabschnitts, ist zwischen dem Durchlasslängsabschnitt und der Kanalwand des Schutzkanalabschnitts wenigstens ein Strömungsdurchgang für eine Gasströmung gebildet, insbesondere wenn sich das Verschlussteil in der Prüfstellung befindet. In der Prüfstellung verschließt das Verschlussteil den Prüfkanal nicht zünddurchschlagsicher.

Wenn mithilfe der Prüfanordnung ein explosionsgeschütztes Gehäuse hergestellt ist, stellt das Prüfteil einen Bestandteil des Gehäuses dar, das den Gehäuseinnenraum umschließt. Die äußere Mündung des Prüfkanals ist der Umgebung zugeordnet, während die innere Mündung in den Gehäuseinnenraum mündet. Befindet sich das Verschlussteil in der Schließstellung, ist der Gehäuseinnenraum explosionsgeschätzt umschlossen.

Bei einer bevorzugten Ausführungsform kann das explosionsgeschützte Gehäuse beispielsweise Bestandteil eines Leuchtmelders sein. Dazu kann in dem Gehäuseinnenraum des Gehäuses eine Lichtquelle, beispielsweise eine Leuchtdiode oder dergleichen, angeordnet sein. In diesem Fall ist das Verschlussteil vorzugsweise für die abgestrahlte Lichtquellenmenge transparent. Dabei kann das Prüfteil bzw. weitere Gehäuseteile für die abgestrahlte Lichtwellenlänge undurchlässig sein.

Die Prüfanordnung wird zur Herstellung eines explosionsgeschützten Gehäuses wie folgt verwendet:
Zunächst wird mithilfe des Prüfteils ein Gehäuse gebildet. Insbesondere wird das Prüfteil mit wenigstens einem weiteren Gehäuseteil stoffschlüssig verbunden, beispielsweise durch Ultraschallschweißen oder Kleben. Dadurch ist ein einen Gehäuseinnenraum begrenzendes Gehäuse gebildet, das zur Umgebung hin noch durch den Prüfkanal offen und nicht zünddurchschlagsicher verschlossen ist. Mittels des Prüfkanals kann das Gehäuse einem Prüfgasdruck ausgesetzt werden. Hierzu kann eine entsprechende Gasquelle an dem Prüfkanal angeschlossen werden. Nach der Gasdruckprüfung wird der Prüfkanal durch Einstecken des Verschlussteils in dessen Schließstellung zünddurchschlagsicher verschlossen.

Optional kann das Verschlussteil vor dem Durchführen der Gasdruckprüfung bis in die Prüfstellung in den Prüfkanal eingesteckt werden. In dieser Stellung wird eine Gasströmung durch den Prüfkanal ermöglicht, obwohl sich das Verschlussteil zumindest teilweise innerhalb des Prüfkanals befindet. Nach dem Durchführen der Gasdruckprüfung kann dann das Verschlussteil aus der Prüfstellung in Einsteckrichtung verschoben werden, bis es die Schließstellung einnimmt und den Prüfkanal zünddurchschlagsicher schließt.

Vorteilhafte Ausgestaltungen der Erfindung ergeben sich aus den abhängigen Patentansprüchen, der Beschreibung sowie den Zeichnungen. Nachfolgend werden bevorzugte Ausführungsbeispiele der Erfindung anhand der beigefügten Zeichnungen im Einzelnen erläutert. Es zeigen:
Fig. 1 eine schematische perspektive Teildarstellung eines Ausführungsbeispiels eines explosionsgeschützten Gehäuses,
Fig. 2 eine Seitenansicht eines Ausführungsbeispiels eines Verschlussteils einer Prüfanordnung,
Fig. 3 einen Querschnitt durch das Verschlussteil aus Fig. 2 gemäß Schnittlinie A-A,
Fig. 4 einen Querschnitt durch das Verschlussteil aus Fig. 2 gemäß Schnittlinie B-B,
Fig. 5 eine teilgeschnittene Seitenansicht eines Ausführungsbeispiels eines Prüfteils,
Fig. 6 eine Draufsicht auf den Prüfkanal des Prüfteils aus Fig. 6 gemäß Pfeil C,
Fig. 7 einen Querschnitt durch den Prüfkanal des Prüfteils aus Fig. 5 gemäß Schnittlinie D-D,
Fig. 8 ein Ausführungsbeispiel eines explosionsgeschützten Gehäuses in teilgeschnittener Seitenansicht mit dem Prüfteil aus Fig. 5 und dem Verschlussteil aus Fig. 2, wobei sich das Verschlussteil in einer Prüfstellung befindet,
Fig. 9 einen Querschnitt durch den Prüfkanal und das Verschlussteil gemäß Schnittlinie E-E in Fig. 8,
Fig. 10 einen Querschnitt durch den Prüfkanal und das Prüfteil gemäß Schnittlinie F-F in Fig. 8 und
Fig. 11 das explosionsgeschützte Gehäuse aus Fig. 8 in einer teilgeschnittenen Seitenansicht, wobei sich das Verschlussteil in seiner Schließstellung befindet.

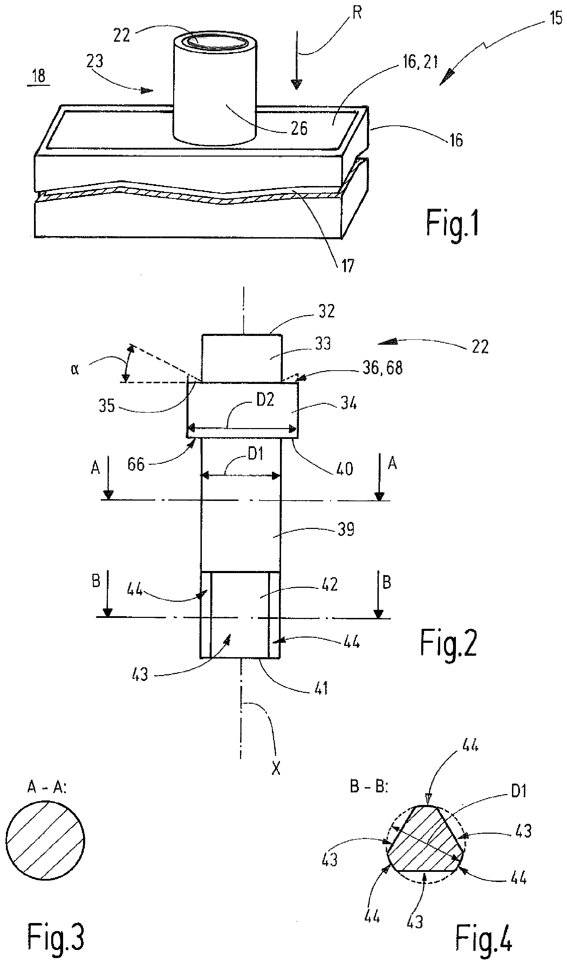

In den Figuren 1, 8 und 11 ist ein Ausführungsbeispiel eines explosionsgeschützten Gehäuses 15 dargestellt. Das explosionsgeschützte Gehäuse 15 besteht aus mehreren Gehäuseteilen 16, die miteinander verbunden sind. Die Verbindung zwischen den Gehäuseteilen 16 ist vorzugsweise stoffschlüssig und beispielsgemäß durch Ultraschallschweißen hergestellt.

Das Gehäuse 15 bzw. die miteinander verbundenen Gehäuseteile 16 begrenzen einen Gehäuseinnenraum 17. Der Gehäuseinnenraum 17 ist durch das Gehäuse 15 von der Umgebung 18 getrennt. Bei vollständig hergestellten, einsatzfähigen Gehäuse 15 ist der Gehäuseinnenraum 17 explosionsgeschützt gegenüber der Umgebung 18.

Wenigstens eines der Gehäuseteile 16 ist durch ein Prüfteil 21 gebildet. Das Prüfteil 21 und ein Verschlussteil 22 bilden eine Prüfteilanordnung 23.

Das Prüfteil 21 hat einen Befestigungsabschnitt 24, der in den Zeichnungen lediglich schematisch veranschaulicht ist. Mittels des Befestigungsabschnitts 24 kann das durch das Prüfteil 21 gebildete Gehäuseteil 16 mit einen oder mehreren anderen Gehäuseteilen 16 des Gehäuses 15 verbunden werden. An dem Befestigungsabschnitt 24 können hierfür entsprechende Befestigungsmittel zur kraftschlüssigen und/oder formschlüssigen Verbindung mit wenigstens einem weiteren Gehäuseteil 16 vorhanden sein. Durch solche Befestigungsmittel ist es möglich, die Gehäuseteile 16 zunächst miteinander zu verbinden und zu positionieren, so dass anschließend eine stoffschlüssige zünddurchschlagsichere Verbindung hergestellt werden kann, beispielsgemäß durch Ultraschallschweißen.

Das Prüfteil 21 wird vollständig von einem Prüfkanal 25 durchsetzt, der sich entlang einer Längsachse L erstreckt. Zur Ausbildung eines ausreichend langen Prüfkanals 25 erstreckt sich vom Befestigungsabschnitt 24 ein Rohrabschnitt 26 weg. Der Rohrabschnitt 26 ist im Ausführungsbeispiel abschnittsweise zylindrisch gestaltet und erstreckt sich entlang der Längsachse L. Koaxial zur Längsachse L durchsetzt der Prüfkanal 25 das Prüfteil 21 bzw. den Rohrabschnitt 26 vollständig und verläuft zwischen einer äußeren Mündung 27 und einer inneren Mündung 28. Die äußere Mündung 27 mündet in die Umgebung 18 und die innere Mündung 28 mündet bei hergestellten explosionsgeschützten Gehäuse 15 in den Gehäuseinnenraum 17. Somit ist die äußere Mündung an einer Außenseite des Prüfteils 21 und die innere Mündung 28 an einer Innenseite des Prüfteils 21 angeordnet.

Bei mehrteiligen, geschweißten explosionsgeschützten Gehäusen 15 wird eine Einzelprüfung durch die Norm gefordert. Der Prüfkanal 25 ist dazu eingerichtet, eine Gasdruckprüfung des explosionsgeschützten Gehäuses 15 ausführen zu können. Über den Prüfkanal 25 kann ein unter Druck stehendes Gas, insbesondere Luft, in den Gehäuseinnenraum 17 eingeleitet und der erforderliche Prüfdruck hergestellt werden. An den Prüfkanal 25 bzw. den Rohrabschnitt 26 kann auf einfache Weise eine Gasdruckquelle angeschlossen werden, um die Prüfung ausführen zu können.

Nach dieser Gasdruckprüfung ist ein zünddurchschlagsicheres Verschließen des Prüfkanals 25 erforderlich. Deswegen gehört zu der Prüfteilanordnung 23 das Verschlussteil 22, das durch Einstecken in einer Einsteckrichtung R in den Prüfkanal 25 zum Schließen des Prüfkanals 25 verwendet werden kann. Ein Ausführungsbeispiel des Verschlussteils 22 ist in den Figuren 2 bis 4, 8 und 11 veranschaulicht.

Das Verschlussteil 22 ist beim Ausführungsbeispiel abschnittsweise zylindrisch ausgeführt. Ausgehend von einem äußeren Ende 32 schließt sich zunächst ein zylindrischer und beispielsgemäß kreiszylindrischer Kopflängsabschnitt 33 an. An den Kopflängsabschnitt 33 schließt sich ein Sicherungslängsabschnitt 34 an, der beim Ausführungsbeispiel ebenfalls einen kreiszylindrischen Querschnitt hat. Der Durchmesser des Sicherungslängsabschnitts 34 ist größer als der des Kopflängsabschnitts 33. Dadurch ist eine erste Ringstufe 35 mit einer Ringfläche 36 zwischen dem Kopflängsabschnitt 33 und dem Sicherungslängsabschnitt 34 gebildet. Die Ringfläche 36 ist rechtwinklig zu einer Längsachse X des Verschlussteils 22 ausgerichtet.

In Fig. 2 ist schematisch punktiert angedeutet, dass die Ringfläche 36 auch um einen Neigungswinkel α gegenüber einer Radialebene zur Längsachse X geneigt sein kann. Der Neigungswinkel α beträgt vorzugsweise 5 bis 20 Grad und bei einem Ausführungsbeispiel ca. 15 Grad. Der Übergang zwischen der Mantelfläche des Kopfabschnitts 33 und der Ringfläche 36 bildet dadurch einen spitzen Winkel und damit einen hinterschnittenen Bereich.

An den Sicherungslängsabschnitt 34 schließt sich ein Schutzlängsabschnitt 39 an. Der Schutzlängsabschnitt 39 hat eine kreiszylindrische Gestalt und mithin einen kreisförmigen Querschnitt (Fig. 3). Der Schutzlängsabschnitt 39 hat einen ersten Durchmesser D1. Beim Ausführungsbeispiel hat der Kopflängsabschnitt 33 einen Durchmesser, der ebenfalls dem ersten Durchmesser D1 entspricht. Die Durchmesser des Schutzlängsabschnitts 39 und des Kopflängsabschnitts 33 können auch unterschiedlich groß sein. Der Sicherungslängsabschnitt 34 hat einen zweiten Durchmesser D2, der größer ist als der erste Durchmesser D1, so dass auch zwischen dem Sicherungslängsabschnitt 34 und dem Schutzlängsabschnitt 39 ein Absatz und beispielsgemäß eine zweite Ringstufe 40 gebildet ist.

Zwischen einem inneren Ende 41 des Verschlussteils und dem Schutzlängsabschnitt 39 erstreckt sich beim Ausführungsbeispiel ein Durchlasslängsabschnitt 42. Die Querschnittsfläche des Durchlasslängsabschnitts 42 ist kleiner als die Querschnittsfläche des Schutzlängsabschnitts 39. Die Außenwand des Durchlasslängsabschnitts 42 ist daher von einer Zylindermantelfläche mit dem ersten Durchmesser D1 zumindest abschnittsweise in Umfangsrichtung um die Längsachse X mit Abstand angeordnet (Fig. 4). Bei dem hier beschriebenen Ausführungsbeispiel ist der Durchlassabschnitt 42 mit mehreren und beispielsgemäß drei in Umfangsrichtung verteilt angeordneten Planflächen 43 versehen, die durch gekrümmte Flächenabschnitte 44 miteinander verbunden sind. In Abwandlung zu dem hier dargestellten Ausführungsbeispiel kann der Durchlasslängsabschnitt 42 aber auch andere Querschnittsflächen aufweisen.

Zumindest der Schutzlängsabschnitt 32 des Verschlussteils 22 hat über seine gesamte Erstreckung entlang der Längsachse X eine konstante Querschnittskontur. Bei einem Ausführungsbeispiel können auch die anderen Längsabschnitte 33, 34, 42 jeweils eine konstante Querschnittskontur aufweisen. Die Querschnittskontur des Kopflängsabschnitts 33, des Sicherungslängsabschnitts 34 sowie des Durchlasslängsabschnitts 42 könnten entlang der Längsachse X auch jeweils variieren.

Das Verschlussteil 22 und/oder das Prüfteil sind jeweils integral aus einem einheitlichen Material und vorzugsweise aus Kunststoff hergestellt. Das Verschlussteil 22 kann aus einem Material hergestellt sein, das für einen Lichtwellenlängenbereich des sichtbaren Lichts transparent ist.

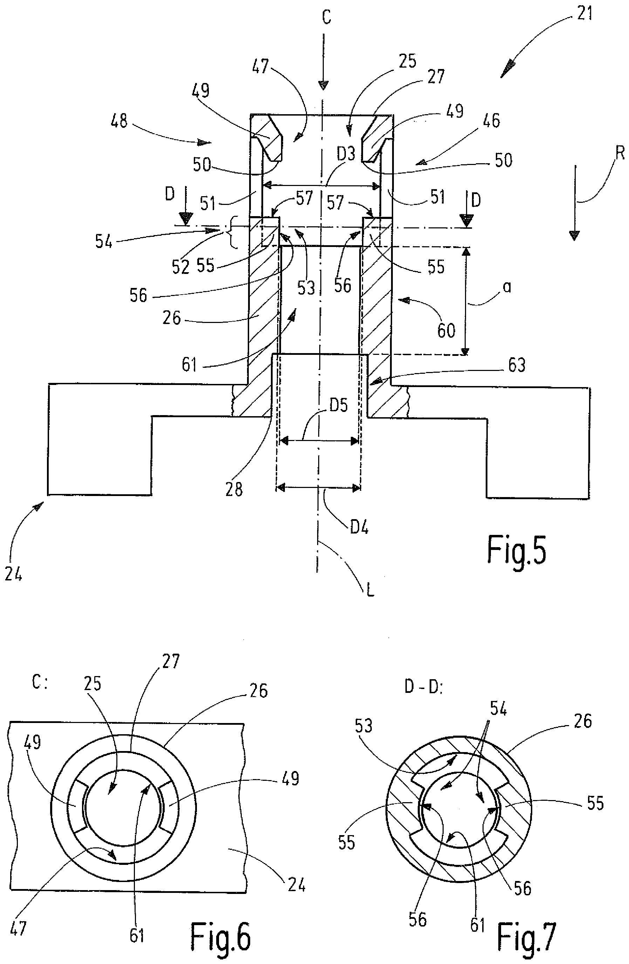

Die Form des Prüfkanals 25 ist an die des Verschlussteils 22 angepasst. Die Ausgestaltung des Prüfteils 21 sowie des Prüfkanals 25 wird nachfolgend anhand der Figuren 5 bis 7 erläutert.

Beim Ausführungsbeispiel schließt sich an die äußere Mündung 27 ein Sicherungskanalabschnitt 46 an. Die Kanalwand 47 des Sicherungskanalabschnitts 46 erstreckt sich auf einer Zylindermantelfläche. Der Durchmesser der Kanalwand 47 bzw. dieser Zylindermantelfläche entspricht einem dritten Durchmesser D3. Der dritte Durchmesser D3 ist größer als der zweite Durchmesser D2 des Sicherungslängsabschnitts 34.

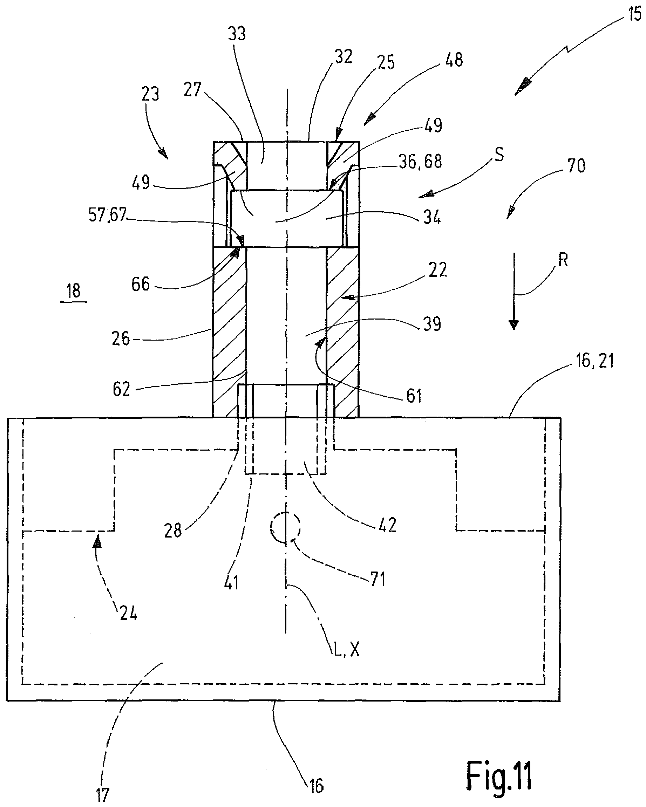

Das Prüfteil 21 weist im Bereich des Sicherungskanalabschnitts 46 eine Sicherungseinrichtung 48 auf. Die Sicherungseinrichtung 48 ist dazu eingerichtet, das Verschlussteil 22 in einer Schließstellung S (Fig. 11) gegen eine Bewegung zu sichern, die der Einsteckrichtung R entgegengerichtet ist. Dabei kann die Sicherungseinrichtung 48 das Verschlussteil 22 beaufschlagen bzw. am Verschlussteil 22 angreifen.

Bei dem hier beschriebenen Ausführungsbeispiel weist die Sicherungseinrichtung 48 wenigstens ein und beispielsgemäß zwei Rastelemente 49 auf. Die beiden Rastelemente 49 sind diametral gegenüberliegend bezüglich der Längsachse L des Prüfkanals 25 angeordnet. Jedes Rastelement 49 erstreckt sich in seiner Ausgangsposition von dem die äußere Mündung 27 umschließenden Rand des Rohrabschnitts 26 schräg zur Längsachse L in den Sicherungskanalabschnitt 46 hinein. Das freie Ende 50 jedes Rastelements 49 hat in der Ausgangsposition einen Radialabstand zur Längsachse L, der kleiner ist als der halbe zweite Durchmesser D2 des Sicherungslängsabschnitts 34 des Verschlussteils 22. Zumindest das freien Ende 50 des Rastelements 49 ist elastisch schwenkbar angeordnet. Das freie Ende 50 des Rastelements 49 kann daher von der beschriebenen Ausgangsposition elastisch von der Längsachse L weg bewegt und beispielsgemäß geschwenkt werden. Um diese Schwenkbewegung zu ermöglichen bzw. zu vereinfachen, ist in dem Rohrabschnitt 26 radial zur Längsachse L jeweils hinter einem freien Ende 50 jedes Rastelements 49 eine Aussparung 51 in der Kanalwand 47 vorhanden, wobei die Aussparung 51 beispielsgemäß als Durchbrechung ausgeführt ist. Die Aussparung 51 schließt sich an den Übergangsbereich zwischen dem Rastelement 49 und dem Rohrabschnitt 26 an und erstreckt sich in Einsteckrichtung R bei dem hier beschriebenen Ausführungsbeispiel bis zur Übergangsstelle zwischen dem Sicherungskanalabschnitt 46 und einem sich anschließenden Klemmkanalabschnitt 52.

Die erste Ringstufe 35 des Verschlussteils 22 bildet ein Gegenrastelement 68 für das wenigstens eine Rastelement 55 des Prüfteils 21. Anstelle der ersten Ringstufe 36 bzw. der zweiten Ringstufe 40 könnten in Umfangsrichtung um die Längsachse X des Verschlussteils 22 auch mit Abstand zueinander angeordnete Radialvorsprünge vorgesehen sein, die jeweils ein Gegenrastelement darstellen. Durch die rotationssymmetrische Ausführung des Sicherungslängsabschnitts 34 um die Längsachse X ist beispielsgemäß sichergestellt, dass das Verschlussteil 22 in jeder beliebigen Drehlage um die Längsachse X in den Prüfkanal 25 eingesteckt werden kann. Kodiermittel zur Vorgabe einer bestimmten Drehlage können deswegen entfallen.

Wenn die erste Ringstufe 35 - wie punktiert in Fig. 2 veranschaulicht und vorstehend beschrieben - um einen Neigungswinkel α geneigt ist und eine Hinterschneidung bildet, kann das wenigstens eine Rastelement 49 in diese Hinterschneidung eingreifen. Eine Kraft, die von innerhalb des Gehäuses auf das das Verschlussteil 22 wirkt führt dann dazu, dass das wenigstens eine Rastelement 49 über die um den Neigungswinkel α geneigte Fläche nach radial innen gegen das Verschlussteil 22 drängt. Das Verschlussteil 22 ist dadurch besonders sicher gehalten.

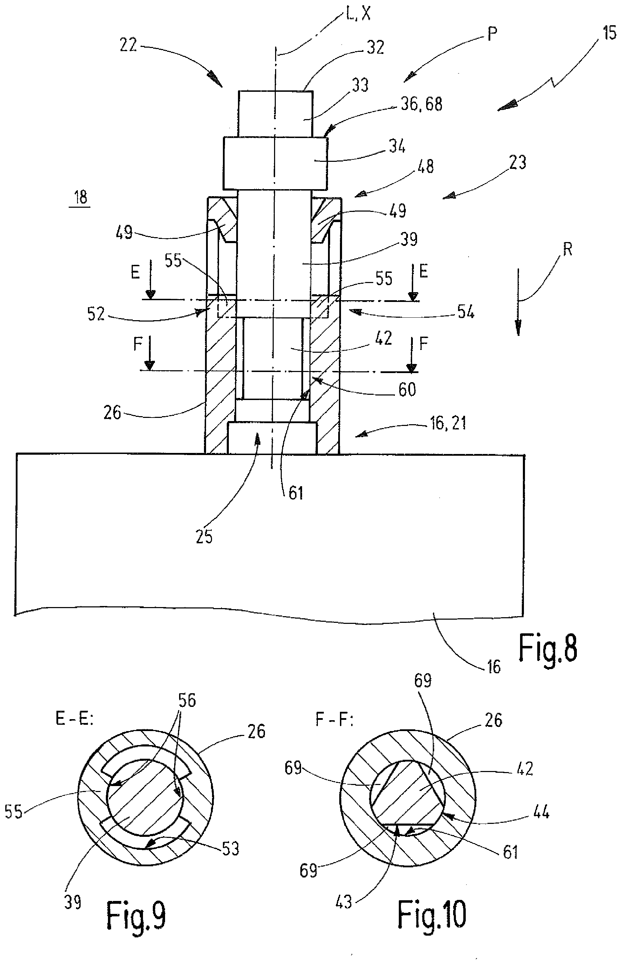

Beim Ausführungsbeispiel hat der Klemmkanalabschnitt 52 eine Kanalwand 53, die sich entlang einer Zylindermantelfläche erstreckt und vorzugsweise einen Durchmesser aufweist, der dem dritten Durchmesser D3 entspricht. Das Prüfteil 21 weist im Bereich des Klemmkanalabschnitts 52 eine Klemmeinrichtung 54 auf. Die Klemmeinrichtung 54 ist dazu eingerichtet, das Verschlussteil 22 klemmend bzw. kraftschlüssig im Prüfkanal 25 zu halten, wenn sich das Verschlussteil 22 in einer Prüfstellung P befindet (Fig. 8).

Die Klemmeinrichtung 54 weist wenigstens ein Klemmelement 55 und beim Ausführungsbeispiel 2 gegenüber der Längsachse L diametral gegenüberliegend angeordnete Klemmelemente 55 auf, die sich ausgehend von der Kanalwand 53 des Klemmkanalabschnitts 52 radial zur Längsachse L nach innen erstrecken. Die einander zugewandten Klemmflächen 56 sind vorzugsweise in Umfangsrichtung um die Längsachse L kreisbogenförmig gekrümmt und liegen auf einer gemeinsamen Zylindermantelfläche mit einem vierten Durchmesser D4, der in etwa dem ersten Durchmesser D1 entspricht und derart an dem ersten Durchmesser D1 angepasst ist, dass eine Klemmwirkung zwischen den Klemmflächen 56 und der Mantelfläche des Schutzlängsabschnitts 39 des Verschlussteils 22 erzeugt werden kann. Der vierte Durchmesser D4 weicht somit lediglich um ein erforderliches, die Klemmwirkung ermöglichendes Maß von dem ersten Durchmesser D1 ab.

An jedem vorhandenen Klemmelement 55 ist eine Stirnfläche 57 vorhanden, die schräg oder rechtwinklig zur Längsachse L ausgerichtet ist und zur äußeren Mündung 27 hinweist. Die wenigstens eine Stirnfläche 57 des wenigstens einen Klemmelements 55 begrenzt beim Ausführungsbeispiel den Klemmkanalabschnitt 52 gegenüber dem Sicherungskanalabschnitt 46.

Im Anschluss an den Klemmkanalabschnitt 52 folgt ein Schutzkanalabschnitt 60. Die axiale Länge a des Schutzkanalabschnitts 60 hat dabei eine Mindestlänge, die zur Bildung eines zünddurchschlagsicheren Spalts erforderlich ist. Der Schutzkanalabschnitt 60 hat eine kreiszylindrische Form mit einem fünften Durchmesser D5. Der fünfte Durchmesser D5 ist so an den ersten Durchmesser D1 des Schutzlängsabschnitts 39 des Verschlussteils 22 angepasst, dass zwischen der Mantelfläche des Schutzlängsabschnitts 39 und einer Kanalwand 61 des Schutzlängsabschnitts 60 ein zünddurchschlagsicherer Spalt 62 gebildet ist, wenn sich das Verschlussteil 22 in der in Fig. 11 gezeigten Schließstellung S befindet.

Wie in Fig. 5 zu erkennen ist, kann sich an den Schutzkanalabschnitt 60 bis zur inneren Mündung 28 ein Endkanalabschnitt 63 anschließen, wobei dieser Endkanalabschnitt 63 bei einem anderen Ausführungsbeispiel auch vollständig entfallen könnte.

Die Prüfteilanordnung 23 wird wie folgt verwendet:
Nach dem Herstellen des explosionsgeschützten Gehäuses 15 unter Verwendung des Prüfteils 21 als eines der Gehäuseteile 16, kann über den Prüfkanal 25 ein Gas in dem Gehäuseinnenraum 17 eingeleitet werden, um das Gehäuse 15 mit einem Gasprüfdruck zu beaufschlagen. Dies kann zur Erfüllung einschlägiger Normen erforderlich sein. Nach der Gasdruckprüfung muss der Prüfkanal 25 verschlossen werden. Hierzu wird das Verschlussteil 22 in Einsteckrichtung R in den Prüfkanal 25 eingesteckt, bis es die Schließstellung S einnimmt (Fig. 11). In der Schließstellung kann eine an der zweiten Ringstufe 40 gebildete, schräg oder vorzugsweise radial zur Längsachse X des Verschlussteils 22 ausgerichtete Anschlagfläche 66 an einer Gegenanschlagfläche 67 am Prüfteil 21 anliegen. Die Gegenanschlagfläche 67 ist durch jeweils eine Stirnfläche 57 des wenigstens einen Klemmelements 55 gebildet. Ein weiteres Bewegen des Verschlussteils 22 in Einsteckrichtung R ist durch den Kontakt zwischen der Anschlagfläche 66 am Verschlussteil 23 und der Gegenanschlagfläche 67 am Prüfteil 21 verhindert.

Um das Einstecken des Verschlussteils 22 in die Schließstellung S zu ermöglichen, schwenken die Rastelemente 50 radial nach außen von der Längsachse L weg. Sobald das Verschlussteil 22 die Schließstellung S erreicht hat, bewegen sich die elastisch ausgelenkten Rastelemente 49 wieder vollständig oder teilweise in ihre ursprüngliche Ausgangslange zurück. Dabei werden die freien Enden 50 der Rastelemente 49 in eine Position gebracht, deren Abstand zur Längsachse L kleiner ist als die Abmessung des Sicherungslängsabschnitts 34. Die Rastelemente 49 hintergreifen sozusagen das Verschlussteil 22 und liegen an der Ringfläche 36 der ersten Ringstufe 35 an oder in Einsteckrichtung R betrachtet der Ringfläche 36 bzw. dem jeweiligen Gegenrastelement 68 gegenüber. Die Rastelemente 49 bzw. die durch das wenigstens eine Rastelement 49 gebildete Sicherungseinrichtung 48 nimmt ihre Sicherungsstellung ein, sobald das Verschlussteil 22 die Schließstellung S erreicht hat und verhindert dadurch ein Bewegen des Verschlussteils 22 entgegen der Einsteckrichtung R entlang der Längsachse L aus dem Prüfkanal 25 heraus.

Dadurch ist sichergestellt, dass der Schutzlängsabschnitt 39 des Verschlussteils 22 über die gesamte axiale Länge a oder zumindest über eine vorgegebene Länge innerhalb des Schutzkanalabschnitts 60 angeordnet ist und einen - parallel zur Längsachse L betrachtet - ausreichend langen zünddurchschlagsicheren Spalt 62 bildet. Die Länge des Schutzlängsabschnitts 39 des Verschlussteils 32 entlang der Längsachse X des Verschlussteils 22 gemessen, entspricht zumindest der axialen Länge a des Schutzkanalabschnitts 60.

Bei dem hier beschriebenen Ausführungsbeispiel weist das Verschlussteil 22 eine weitere Funktion auf, die durch den Durchlasslängsabschnitt 42 erreicht ist. Der Durchlasslängsabschnitts 42 des Verschlussteils 22 ist optional und kann bei einem anderen Ausführungsbeispiel auch entfallen. Durch den Durchlasslängsabschnitt 42 ergibt sich die Möglichkeit, das Verschlussteil 22 vor dem zünddurchschlagsicheren Verschließen des Prüfkanals 25 in eine Prüfstellung P in den Prüfkanal 25 einzustecken, wie sie in Fig. 8 veranschaulicht ist. In der Prüfposition P befindet sich der Schutzlängsabschnitt 39 des Verschlussteils 22 außerhalb des Schutzkanalabschnitts 60, so dass das Verschlussteil 22 den Prüfkanal 25 nicht zünddurchschlagsicher schließt. Innerhalb des Schutzkanalabschnitts 60 ist der Durchlasslängsabschnitt 42 positioniert. Da dessen Querschnittsfläche kleiner ist als die Querschnittsfläche des Schutzlängsabschnitts 39 und mithin auch kleiner als die Querschnittsfläche des Schutzkanalabschnitts 60, ist zwischen der Mantelfläche des Durchlasslängsabschnitts 42 und der Kanalwand 61 des Schutzkanalabschnitts 60 wenigstens ein Strömungsdurchgang und beispielsgemäß drei Strömungsdurchgänge 69 gebildet. Die Strömungsdurchgänge 69 sind beim Ausführungsbeispiel jeweils durch eine Planfläche 43 und den benachbarten Abschnitt der Kanalwand 61 des Schutzkanalabschnitts 60 begrenzt. Dadurch kann in der Prüfstellung P eine Gasströmung durch den Prüfkanal 25 in den Gehäuseinnenraum 17 erfolgen.

Gleichzeitig ist das Verschlussteil 22 durch die Klemmeinrichtung 54 beispielsgemäß die beiden Klemmelemente 55 kraftschlüssig am Prüfteil 21 gehalten. Die Klemmelemente 55 beaufschlagen mit ihrer jeweiligen Klemmfläche 56 einen benachbarten Mantelflächenbereich des Schutzlängsabschnitts 39 des Verschlussteils 22. Da die Klemmelemente 55 in Umfangsrichtung um die Längsachse L betrachtet mit Abstand zueinander angeordnet sind, verbleibt zwischen den Klemmelementen 55 ein Freiraum, durch den ein Gas strömen kann (Fig. 9).

In der Prüfstellung P kann die Gasdruckprüfung des Gehäuses 15 durchgeführt werden. Nach Abschluss der Gasdruckprüfung kann durch ein weiteres Verschieben des Verschlussteils 22 aus der Prüfstellung P in die Schließstellung S der Prüfkanal zünddurchschlagsicher geschlossen werden.

Das explosionsgeschützte Gehäuse 25 kann beispielsweise als Leuchtmelder 70 eingesetzt werden bzw. die Funktion eines Leuchtmelders 70 aufweisen. Hierzu kann im Gehäuseinnenraum 17 eine Lichtquelle 71 vorhanden sein (Fig. 11). Die Gehäuseteile 16 sind für die abgestrahlte Lichtwellenlänge der Lichtquelle 71 vorzugsweise nicht transparent. Demgegenüber ist das Verschlussteil 22 bei dieser Ausführung aus einem Material hergestellt, das zumindest für einen abgestrahlten Lichtwellenlängenbereich der Lichtquelle 71 transparent ausgeführt ist.

Umgekehrt könnte in dem explosionsgeschützten Gehäuse 15 auch ein Lichtempfänger angeordnet sein und Licht durch das Verschlussteil 22 in das Gehäuseinnere 17 geleitet werden.

Die Erfindung betrifft eine Prüfteilanordnung 23 zur Herstellung eines explosionsgeschützten Gehäuses 15. Die Prüfteilanordnung 23 hat ein Prüfteil 21, das als Gehäuseteil 16 bei der Herstellung des Gehäuses 15 verwendet werden kann. Das Prüfteil 21 wird vollständig durch einen Prüfkanal 25 durchsetzt, der sich von einer äußeren Mündung 27 zu einer inneren Mündung 28 erstreckt. Ein Verschlussteil 22 der Prüfteilanordnung 23 kann werkzeuglos gerade entlang einer Einsteckrichtung R in den Prüfkanal 25 bis zu einer Schließstellung S eingesteckt werden, in der er verrastet und gegen ein Herausbewegen aus dem Prüfkanal 25 gesichert ist. Dabei bildet das Verschlussteil 22 mit dem Prüfkanal 25 einen zünddurchschlagsicheren Spalt 62. An dem Prüfteil 21 ist eine Sicherungseinrichtung 48 mit wenigstens einem Rastelement 49 vorhanden, das mit wenigstens einem Gegenrastelement 68 an dem Verschlussteil 22 zusammenwirkt und dieses rastend in der Schließstellung S hält.

### Bezugszeichenliste:

- 15: explosionsgeschütztes Gehäuse
- 16: Gehäuseteil
- 17: Gehäuseinnenraum
- 18: Umgebung

- 21: Prüfteil
- 22: Verschlussteil
- 23: Prüfteilanordnung
- 24: Befestigungsabschnitt
- 25: Prüfkanal
- 26: Rohrabschnitt
- 27: äußere Mündung des Prüfkanals
- 28: innere Mündung des Prüfkanals

- 32: äußeres Ende des Verschlussteils
- 33: Kopflängsabschnitt
- 34: Sicherungslängsabschnitt
- 35: erste Ringstufe
- 36: Ringfläche

- 39: Schutzlängsabschnitt
- 40: zweite Ringstufe
- 41: inneres Ende des Verschlussteils
- 42: Durchlasslängsabschnitt

- 46: Sicherungskanalabschnitt
- 47: Kanalwand des Sicherungskanalabschnitts
- 48: Sicherungseinrichtung
- 49: Rastelement
- 50: freies Ende des Rastelements

- 52: Klemmkanalabschnitt
- 53: Kanalwand des Klemmkanalabschnitts
- 54: Klemmeinrichtung
- 55: Klemmelement
- 56: Klemmfläche
- 57: Stirnfläche

- 60: Schutzkanalabschnitt
- 61: Kanalwand des Schutzkanalabschnitts
- 62: zünddurchschlagsicherer Spalt
- 63: Endkanalabschnitt

- 66: Anschlagfläche
- 67: Gegenanschlagfläche
- 68: Gegenrastelement
- 69: Strömungsdurchgang
- 70: Leuchtmelder
- 71: Lichtquelle

- α: Neigungswinkel

- a: axiale Länge des Schutzkanalabschnitts
- D1: erster Durchmesser
- D2: zweiter Durchmesser
- D3: dritter Durchmesser
- D4: vierter Durchmesser
- D5: fünfter Durchmesser
- L: Längsachse des Prüfkanals
- P: Prüfstellung
- S: Schließstellung
- X: Längsachse des Verschlussteils

## Patentansprüche

1. Prüfteilanordnung (23) für ein explosionsgeschütztes Gehäuse (15),
mit Prüfteil (21), das von einem Prüfkanal (25) durchsetzt wird, der auf einer Innenseite des Prüfteils (21) eine innere Mündung (28) und auf einer Außenseite des Prüfteils (21) eine äußere Mündung (27) aufweist,
mit einer an dem Prüfteil (21) angeordneten Sicherungseinrichtung (48),
**dadurch gekennzeichnet, dass** ein Verschlussteil (22) vorhanden ist, das in einer Einsteckrichtung (R) in den Prüfkanal (25) einsteckbar ist, bis es eine Schließstellung (S) einnimmt,
dass das Verschlussteil (22) eine Anschlagfläche (66) aufweist, die in einer Schließstellung (S) des Verschlussteils (22) an einer Gegenanschlagfläche (67) des Prüfteils (21) anliegt, wodurch eine Bewegung des Verschlussteils (22) aus der Schließstellung (S) in Einsteckrichtung (R) verhindert ist, und wobei das sich in der Schließstellung (S) befindende Verschlussteil (22) den Prüfkanal (25) zünddurchschlagsicher schließt,
dass die Sicherungseinrichtung (48) eine Sicherungsstellung einnimmt, wenn sich das Verschlussteil (22) in seiner Schließstellung (S) befindet und das Verschlussteil (22) gegen eine Bewegung entgegen der Einsteckrichtung (R) sichert,
dass die Sicherungseinrichtung (48) wenigstens ein Rastelement (49) aufweist, das rechtwinkelig und/oder schräg zu der Einsteckrichtung (R) elastisch bewegbar am Prüfteil (21) gelagert ist,
und dass an dem Verschlussteil (22) ein Gegenrastelement (68) vorhanden ist, das zur Sicherung des Verschlussteils (22) in dessen Schließstellung (S) mit dem Rastelement (49) zusammenwirkt.

2. Prüfteilanordnung nach Anspruch 1,
**dadurch gekennzeichnet, dass** das wenigstens eine Rastelement (49) in einen Sicherungskanalabschnitt (46) des Prüfkanal (25) hineinragt.

3. Prüfteilanordnung nach Anspruch 1 oder 2,
**dadurch gekennzeichnet, dass** das Gegenrastelement (68) durch eine Stufe (35) an dem Verschlussteil (22) gebildet ist.

4. Prüfteilanordnung nach einem der Ansprüche 1 bis 3,
**dadurch gekennzeichnet, dass** in dem Sicherungskanalabschnitt (46) benachbart zu dem wenigstens einen Rastelement (49) eine Aussparung (51) vorhanden ist.

5. Prüfteilanordnung nach einem der vorhergehenden Ansprüche,
**dadurch gekennzeichnet, dass** das Verschlussteil (22) in der Einsteckrichtung (R) in den Prüfkanal (25) einsteckbar ist, bis es eine Prüfstellung (P) einnimmt, in der es kraftschlüssig in dem Prüfkanal (25) gehalten ist ohne den Prüfkanal (25) zünddurchschlagsicher zu schließen und eine Gasströmung durch den Prüfkanal (25) zulässt.

6. Prüfteilanordnung nach Anspruch 5,
**dadurch gekennzeichnet, dass** der Prüfkanal (25) einen Klemmkanalabschnitt (52) aufweist, dem eine Klemmeinrichtung (54) zugeordnet ist, die dazu eingerichtet ist, das Verschlussteil (22) in dessen Prüfstellung (P) klemmend zu beaufschlagen.

7. Prüfteilanordnung nach Anspruch 6,
**dadurch gekennzeichnet, dass** die Klemmeinrichtung (54) wenigsten ein Klemmelement (55) aufweist, das in den Klemmkanalabschnitt (52) hineinragt.

8. Prüfteilanordnung nach einem der vorhergehenden Ansprüche,
**dadurch gekennzeichnet, dass** der Prüfkanal (25) einen Schutzkanalabschnitt (60) aufweist, der dazu eingerichtet ist gemeinsam mit einem Schutzlängsabschnitt (39) des Verschlussteils (22) einen zünddurchschlagsicheren Spalt (62) zu bilden, wenn sich das Verschlussteil (22) in der Schließstellung (S) befindet.

9. Prüfteilanordnung nach Anspruch 8 und nach einem der Ansprüche 5 bis 7,
**dadurch gekennzeichnet, dass** das Verschlussteil (22) einen Durchlasslängsabschnitt (42) aufweist, dessen Querschnittsfläche kleiner ist als die Querschnittsfläche des Schutzlängsabschnitts (39), wobei der Durchlasslängsabschnitt (42) in der Prüfstellung (P) innerhalb des Schutzkanalabschnitts (60) angeordnet ist und mit dem Schutzkanalabschnitt (60) wenigstens einen Strömungsdurchgang (69) für eine Gasströmung bildet.

10. Prüfteilanordnung nach einem der vorhergehenden Ansprüche,
**dadurch gekennzeichnet, dass** das Verschlussteil (22) aus einem für einen sichtbaren Lichtwellenlängenbereich transparenten Material besteht.

11. Explosionsgeschütztes Gehäuse (15), das wenigstens eine Prüfteilanordnung (23) nach einem der vorhergehenden Ansprüche aufweist,
mit einem Gehäuse (15), das das Prüfteil (21) enthält, wobei in dem Gehäuse (15) ein Gehäuseinnenraum (17) vorhanden ist, der gegenüber einer Umgebung (18) explosionsgeschützt umschlossen ist,
wobei die innere Mündung (28) in den Gehäuseinnenraum (17) mündet und die äußere Mündung (27) in die Umgebung (18) mündet.

12. Explosionsgeschütztes Gehäuse (15) nach Anspruch 11, **dadurch gekennzeichnet, dass** es Bestanteil eines Leuchtmelders (70) ist, wobei in dem Gehäuseinnenraum (17) eine Lichtquelle (71) angeordnet ist und das Verschlussteil (22) für zumindest eine abgestrahlte Lichtwellenlänge transparent ist.

13. Verfahren zur Herstellung und Prüfung eines explosionsgeschützten Gehäuses (15), das wenigstens eine Prüfteilanordnung (23) nach einem der Ansprüche 1 bis 10 aufweist, mit folgenden Schritten:
- Verwenden des Prüfteils (21) zur Bildung eines einen Gehäuseinnenraum (17) begrenzenden Gehäuses (15),
- Beaufschlagen des Gehäuses (15) mit einem Prüfgasdruck mittels Gaszufuhr durch den Prüfkanal (25),
- Einstecken des Verschlussteils (22) im Prüfkanal (25) bis das Verschlussteil (22) seine Schließstellung (S) einnimmt und den Prüfkanal (25) zünddurchschlagsicher schließt.

## Claims

1. Test part arrangement (23) for an explosion-proof housing (15),
having a test part (21), which is completely passed through by a test channel (25) that has an inner orifice (28) on an inner side of the test part (21) and an outer orifice (27) on an outer side of the test part (21),
having a securing device (48) arranged on the test part (21),
**characterized in that** a closure part (22) is present that can be inserted in an insertion direction (R) into the test channel (25) until it reaches a closing position (S),
that the closure part (22) comprises a stop surface (66) that abuts against a counter-stop surface (67) of the test part (21) in the closing position (S) of the closure part (22), whereby a movement of the closure part (22) out of the closing position (S) in insertion direction (R) is blocked and whereby the closure part (22) being in the closing position (S) closes the test channel (25) in flameproof manner,
that the securing device (48) takes a securing position, if the closure part (22) is in its closing position (S) and secures the closure part (22) against a movement opposite the insertion direction (R),
that the securing device (48) comprises at least one latch element (49) that is elastically movable supported on the test part (21) orthogonal and/or obliquely to the insertion direction (R),
and that a counter latch element (68) is present on the closure part (22) that cooperates with the latch element (49) for securing the closure part (22) in its closing position (S).

2. Test part arrangement according to claim 1, **characterized in that** the at least one latch element (49) extends into a securing channel section (46) of the test channel (25) .

3. Test part arrangement according to claim 1 or 2, **characterized in that** the counter latch element (68) is formed by a step (35) on the closure part (22).

4. Test part arrangement according to one of the claims 1 to 3, **characterized in that** a recess (51) is present in the securing channel section (46) adjacent to the at least one latch element (49).

5. Test part arrangement according to any of the preceding claims, **characterized in that** the closure part (22) can be inserted in insertion direction (R) into the test channel (25) until it reaches a test position (P) in which it is held in the test channel (25) in a force-fit manner without closing the test channel (25) in a flameproof manner and allowing a gas flow through the test channel (25).

6. Test part arrangement according to claim 5, **characterized in that** the test channel (25) comprises a clamping channel section (52) to which a clamping device (54) is assigned that is configured to act in a clamping manner on the closure part (22) in its test position (P).

7. Test part arrangement according to claim 6, **characterized in that** the clamping device (54) comprises at least one clamping element (55) extending into the clamping channel section (52).

8. Test part arrangement according to any of the preceding claims, **characterized in that** the test channel (25) comprises a protection channel section (60) that is configured to form a flame-proof gap (62) together with a protection longitudinal section (39) of the closure part (22), if the closure part (22) is in the closing position (S).

9. Test part arrangement according to claim 8 and according to one of the claims 5 to 7, **characterized in that** the closure part (22) has a passage longitudinal section (42), the cross-section of which is smaller than the cross-section of the protection longitudinal section (39), wherein the passage longitudinal section (42) is arranged inside the protection channel section (60) in the test position (P) and forms at least one flow passage (69) for a gas flow with the protection channel section (60).

10. Test part arrangement according to any of the preceding claims, **characterized in that** the closure part (22) consists of a material, which is transparent for a visible light wavelength range.

11. Explosion-proof housing (15) comprising at least one test part arrangement (23) according to one of the preceding claims,
having a housing (15) comprising the test part (21), wherein a housing interior (17) is present in the housing (15), which is enclosed in an explosion-proof manner relative to the environment (18),
wherein the inner orifice (28) opens into the housing interior (17) and the outer orifice (27) opens into the environment (18).

12. Explosion-proof housing (15) according to claim 11, **characterized in that** it is part of a light indicator (70), wherein a light source (71) is arranged in the housing interior (17) and the closure part (22) is transparent for at least one emitted light wavelength.

13. Method for manufacturing and testing an explosion-proof housing (15) that comprises at least one test part arrangement (23) according to one of the claims 1 to 10, comprising the following steps:
- using the test part (21) for forming a housing (15) limiting a housing interior (17),
- applying a test gas pressure on the housing (15) by means of gas supply through the test channel (25),
- inserting the closure part (22) in the test channel (25) until the closure part (22) reaches its closing position (S) and closes the test channel (25) in a flame-proof manner.

## Revendications

1. Système de pièce d'essai (23) pour un boîtier antidéflagrant (15),
comprenant une pièce d'essai (21) traversée par un canal d'essai (25) qui présente une bouche intérieure (28) sur une face intérieure de la pièce d'essai (21) et une bouche extérieure (27) sur une face extérieure de la pièce d'essai (21),
comprenant un dispositif de blocage (48) placé sur la pièce d'essai (21),
**caractérisé en ce qu'**il est prévu un élément de fermeture (22) qui peut être inséré dans le canal d'essai (25), dans un sens d'insertion (R), jusqu'à ce qu'il occupe une position de fermeture (S),
**en ce que** l'élément de fermeture (22) présente une surface de butée (66) qui, dans une position de fermeture (S) de l'élément de fermeture (22), est appliquée contre une surface de butée antagoniste (67) de la pièce d'essai (21), empêchant ainsi un mouvement de l'élément de fermeture (22) dans le sens d'insertion (R), l'éloignant de la position de fermeture (S), et l'élément de fermeture (22), qui se trouve dans la position de fermeture (S), obturant le canal d'essai (25) de manière antidéflagrante,
**en ce que** le dispositif de blocage (48) occupe une position de blocage, lorsque l'élément de fermeture (22) se trouve dans sa position de fermeture (S), et empêche l'élément de fermeture (22) d'exécuter un mouvement en sens inverse du sens d'insertion (R),
**en ce que** le dispositif de blocage (48) présente au moins un élément de verrouillage (49) qui est monté sur la pièce d'essai (21) avec possibilité de déplacement élastique à angle droit et/ou en biais par rapport au sens d'insertion (R),
et **en ce qu'**il est prévu sur l'élément de fermeture (22), un élément de verrouillage antagoniste (68) qui coopère avec l'élément de verrouillage (49) pour bloquer l'élément de fermeture (22) dans la position de fermeture (S) de celui-ci.

2. Système de pièce d'essai selon la revendication 1, **caractérisé en ce que** l'élément de verrouillage (49), au nombre d'au moins un, avance dans un tronçon de canal de blocage (46) du canal d'essai (25).

3. Système de pièce d'essai selon la revendication 1 ou 2, **caractérisé en ce que** l'élément de verrouillage antagoniste (68) est constitué d'un gradin (35) sur l'élément de fermeture (22).

4. Système de pièce d'essai selon l'une des revendications 1 à 3, **caractérisé en ce qu'**un évidement (51) est prévu dans le tronçon de canal de blocage (46), dans le voisinage de l'élément de verrouillage (49), au nombre d'au moins un.

5. Système de pièce d'essai selon l'une des revendications précédentes, **caractérisé en ce que** l'élément de fermeture (22) peut être inséré dans le canal d'essai (25), dans le sens d'insertion (R), jusqu'à ce qu'il occupe une position d'essai (P) dans laquelle il est maintenu par adhérence dans le canal d'essai (25), sans fermer le canal d'essai (25) de manière antidéflagrante, et en autorisant un écoulement de gaz à travers le canal d'essai (25).

6. Système de pièce d'essai selon la revendication 5, **caractérisé en ce que** le canal d'essai (25) présente un tronçon de canal de serrage (52) auquel est associé un dispositif de serrage (54) qui est conçu pour agir par serrage sur l'élément de fermeture (22), dans la position d'essai de celui-ci.

7. Système de pièce d'essai selon la revendication 6, **caractérisé en ce que** le dispositif de serrage (54) présente au moins un élément de serrage (55) qui avance dans le tronçon de canal de serrage (52).

8. Système de pièce d'essai selon l'une des revendications précédentes, **caractérisé en ce que** le canal d'essai (25) présente un tronçon de canal de protection (60) qui est conçu pour former un interstice antidéflagrant (62), conjointement avec une partie longitudinale de protection (39) de l'élément de fermeture (22), lorsque l'élément de fermeture (22) se trouve dans la position de fermeture (S).

9. Système de pièce d'essai selon la revendication 8 et selon l'une des revendications 5 à 7, **caractérisé en ce que** l'élément de fermeture (22) présente une partie longitudinale de passage (42) dont l'aire de section transversale est plus petite que l'aire de section transversale de la partie longitudinale de protection (39), la partie longitudinale de passage (42), dans la position d'essai (P), étant disposée à l'intérieur du tronçon de canal de protection (60) et formant avec le tronçon de canal de protection (60) au moins un passage d'écoulement (69) pour un écoulement de gaz.

10. Système de pièce d'essai selon l'une des revendications précédentes, **caractérisé en ce que** l'élément de fermeture (22) est constitué d'un matériau qui est transparent à une gamme de longueurs d'ondes lumineuses visibles.

11. Boîtier antidéflagrant (15) qui présente au moins un système de pièce d'essai (23) selon l'une des revendications précédentes,
comprenant un boîtier (15) qui contient la pièce d'essai (21), le boîtier (15) renfermant un espace intérieur de boîtier (17) qui est entouré de manière antidéflagrante vis-à-vis d'un environnement,
la bouche intérieure (28) s'ouvrant sur l'espace intérieur de boîtier (17), et la bouche extérieure (27) s'ouvrant sur l'environnement (18).

12. Boîtier antidéflagrant (15) selon la revendication 11, **caractérisé en ce qu'**il fait partie d'un avertisseur lumineux (70), une source lumineuse (71) étant disposée dans l'espace intérieur de boîtier (17), et l'élément de fermeture (22) étant transparent à au moins une longueur d'onde lumineuse émise.

13. Procédé de fabrication et d'essai d'un boîtier antidéflagrant (15), qui présente au moins un système de pièce d'essai (23) selon l'une des revendications 1 à 10, comprenant les étapes suivantes :
- utilisation de la pièce d'essai (21) pour la réalisation d'un boîtier (15) délimitant un espace intérieur de boîtier (17),
- application d'une pression de gaz d'essai au boîtier (15), par apport de gaz à travers le canal d'essai (25),
- insertion de l'élément de fermeture (22) dans le canal d'essai (25), jusqu'à ce que l'élément de fermeture (22) occupe sa position de fermeture (S) et ferme le canal d'essai (25) de manière antidéflagrante.
